# EUROPÄISCHE PATENTSCHRIFT

(11) **EP 1 494 907 B1**
(45) Veröffentlichungstag und Bekanntmachung des Hinweises auf die Patenterteilung: **21.11.2007**
(21) Anmeldenummer: 03714906.9
(22) Anmeldetag: 31.03.2003
(51) Int. Cl.: B61H 5/00, F16D 55/224

(54) **BREMSZUSPANNEINRICHTUNG MIT ELEKTRISCH BETÄTIGTER EINRICHTUNG ZUM NOT- UND HILFSLÖSEN**
BRAKE APPLICATION DEVICE COMPRISING AN ELECTRICALLY ACTUATED DEVICE FOR EMERGENCY AND AUXILIARY RELEASE
DISPOSITIF DE SERRAGE DE FREIN DOTE D'UN MECANISME ENTRAINE ELECTRIQUEMENT POUR LE DESSERRAGE AUXILIAIRE ET/OU D'URGENCE

(30) Priorität: 03.04.2002 DE 10214672
(43) Veröffentlichungstag der Anmeldung: 12.01.2005
(73) Patentinhaber: KNORR-BREMSE Systeme für Schienenfahrzeuge GmbH, 80809 München (DE)
(72) Erfinder: FUDERER, Erich, 82256 Fürstenfeldbruck (DE); WOLFSTEINER, Peter, 80797 München (DE); FRIESEN, Ulf, 81739 München (DE); VOHLA, Manfred, A-1130 Wien (AT)
(86) Internationale Anmeldenummer: PCT/EP2003/003314
(87) Internationale Veröffentlichungsnummer: WO 2003/082648

(56) Entgegenhaltungen:
- DE-A- 3 423 510
- US-A- 4 895 227

## Beschreibung

### Stand der Technik

Die Erfindung geht aus von einer Bremszuspanneinrichtung für Fahrzeuge, insbesondere für Schienenfahrzeuge, mit einem Verschleißnachsteller, der eine Einrichtung zum Notlösen der Bremse umfasst, nach der Gattung des Patentanspruchs 1.

Eine solche Bremszuspanneinrichtung ist aus der DE 199 45 701 A1 bekannt. Unter einem Notlösen der Bremse wird ein notfallbedingter Bremskraftabbau der unter Bremskraft stehenden Bremse verstanden. Darüber hinaus kann ein Lösen der nicht unter Bremskraft stehenden Bremse zu Wartungsarbeiten, beispielsweise zum Bremsbelagwechsel, notwendig sein, was als Hilfslösen bezeichnet wird.

Eine weitere bekannte Bremszuspanneinrichtung ist in der EP 0 699 846 A2 beschrieben, wobei ein Notlösen der Bremse, d.h. ein notfallbedingter Bremskraftabbau der unter Bremskraft stehenden Bremse, über einen pneumatischen Bremsaktor erfolgt, welcher die Betriebsbremskraft liefert. Zum Hilfslösen der nicht unter Bremskraft stehenden Bremse muss eine Gewindespindel eines Verschleißnachstellers von Hand verdreht werden.

Der vorliegenden Erfindung liegt die Aufgabe zugrunde, eine Bremszuspanneinrichtung der eingangs erwähnten Art derart weiter zu entwickeln, dass sie bei hoher Funktionalität einfach aufgebaut und komfortabel zu bedienen ist.

Erfindungsgemäß wird diese Aufgabe durch die kennzeichnenden Merkmale von Anspruch 1 gelöst.

### Vorteile der Erfindung

Da die Lösefunktionen der Bremse - Notlösen einerseits und Hilfslösen andererseits - in einer einzigen kombinierten Einrichtung zum Not- und Hilfslösen integriert sind, welche darüber hinaus von einer gemeinsamen Antriebseinheit elektrisch betätigt wird, vereinfachen sich Aufbau und Bedienung der Bremszuspanneinrichtung erheblich. Durch den elektrischen Antrieb kann das bisher von Hand für jede und an jeder Bremszuspanneinrichtung einzeln auszuführende Hilfslösen durch ein wesentlich komfortableres, elektrisch fembetätigtes Hilfslösen ersetzt werden, das dann beispielsweise von einem Führerstand des Fahrzeugs aus erfolgt. Insbesondere können sämtliche Bremszuspanneinrichtungen des Fahrzeugs durch eine gemeinsame und einmalige Ansteuerung hilfsgelöst werden, wodurch sich die Wartungszeit wesentlich verkürzt. Alternativ kann jede Bremszuspanneinrichtung natürlich auch dezentral betätigt werden, beispielsweise über einen unter einer abschließbaren Klappe am Wagenkasten angeordneten elektrischen Schalter. Schließlich sind die elektrischen Ansteuerieitungen auf einfache Weise in unterschiedliche Fahrzeugbauarten integrier- und platzsparend verlegbar.

Die Einrichtung zum Not- und Hilfslösen der Bremse ist erfindungsgemäß in einen als Zug- oder Druckstangensteller ausgebildeten Verschleißnachsteller mit einem Schraubgetriebe integriert, das als Verschraubungsteile eine Gewindespindel und eine auf dieser verschraubbare Mutter aufweist, wobei wenigstens eines der Verschraubungsteile zum Not- und Hilfslösen der Bremse elektrisch betätigt ist. Da das Nötlösen über den Druck- bzw. Zugstangensteller erfolgt, findet das Notlösen unabhängig von der Funktionsfähigkeit des Bremsaktors oder dessen Ansteuerung statt, was eine zusätzliche Sicherheitsebene darstellt. Weiterhin dient das Schräubgetriebe im Sinne einer Funktionsvereinigung zum einen der Verschleißnachstellung und zum andern zum Not- und Hilfslösen der Bremse, wodurch Bauraum und Gewicht eingespart wird.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform der Erfindung ist das eine Verschraubungsteil des Schraubgetriebes von der gemeinsamen elektrischen Antriebseinheit zum Not- und Hilfslösen drehbetätigt. In bevorzugter Weise ist zumindest während der Drehbetätigung des anderen Verschraubungsteils in einer Drehrichtung zur Verschleißnachstellung das eine Verschraubungsteil drehfest gehaltert, beispielsweise dadurch, daß das eine Verschraubungsteil mit seiner zugeordneten elektrischen Antriebseinheit mittels eines entsperrbaren Freilaufs gekoppelt ist, welcher einerseits eine Drehung des einen Verschraubungsteils mittels der elektrischen Antriebseinheit in einer Richtung zur Verschleißnachstellung zuläßt und andererseits zur Sperrung dieser Drehung ausgebildet ist, wenn sie nicht von der elektrischen Antriebseinheit veranlaßt ist.

Weiterhin wird das andere Verschraubungsteil vorzugsweise ebenfalls von einer elektrischen Antriebseinheit betätigt und zwar unabhängig von einer Betätigung der elektrischen Antriebseinheit des einen Verschraubungsteils. Infolgedessen können die in einem einzigen Schraubgetriebe vereinigten Funktionen - Verschleißnachstellen einerseits und Not- und Hilfslösen andererseits - einzeln und unabhängig voneinander ausgeführt werden, ohne daß sie sich gegenseitig beeinflussen.

Besonders bevorzugt wird das eine Verschraubungsteil durch die Mutter und das andere Verschraubungsteil durch die Spindel des Schraubgetriebes gebildet. Schließlich kann der entsperrbare Freilauf als bauraumsparender Schlingfederfreilauf zwischen einer zylindrischen Wandung eines drehfesten Teils und einer mit der Mutter mitdrehenden Hülse ausgeführt werden.

Besonders zu bevorzugende Maßnahmen sehen eine Kupplung vor, durch welche das andere Verschraubungsteil bei Vorliegen einer von einer Bremsung herrührenden Axialkraft mit einem drehfesten Teil, beispielsweise einem Gehäuse, drehfest koppelbar und andernfalls von diesem entkoppelbar ist. Hierdurch wird das über die Zangenhebel der Bremszuspanneinrichtung durch die Bremskraft belastete Verschraubungsteil am Gehäuse und nicht an der elektrischen Antriebseinheit abgestützt, welche hierdurch kleiner dimensioniert werden kann, was zu einer Reduzierung der Baugröße beiträgt.

Gemäß einer Weiterbildung ist der elektrischen Antriebseinheit und dem anderen Verschraubungsteil eine Rutschkupplung zwischengeordnet, welche bei Erreichen von Anschlagpositionen durchrutschend und andernfalls koppelnd ausgebildet ist. Eine Anschlagposition wird beispielsweise durch das Anlegen der Bremsbeläge an der Bremsscheibe und eine weitere Anschlagposition durch eine Verschraubungsendlage gebildet, in welcher das andere Verschraubungsteil in das eine Verschraubungsteil bis zum Anschlag eingeschraubt ist oder umgekehrt. In letzterem Falle würde das andere Verschraubungsteil mit dem einen Verschraubungsteil mitverdreht und die Drehbewegung auf die elektrische Antriebseinheit in unerwünschter Weise übertragen werden. Die Rutschkupplung schützt folglich die elektrische Antriebseinheit vor Stößen bei Erreichen der Anschlagpositionen, indem sie durchrutscht, um dem Motor ein sanftes und allmähliches Beendigen seiner Drehbewegung zu ermöglichen und entkoppelt sie von über andere Bauteile eingeleiteten Drehmomenten. Die Rutschkupplung ist vorzugsweise der Kupplung und der elektrischen Antriebseinheit zwischengeordnet.

### Zeichnungen

Ein Ausführungsbeispiel der Erfindung ist in der Zeichnung dargestellt und in der nachfolgenden Beschreibung näher erläutert. In der Zeichnung zeigt:
- Fig.1: einen Längsschnitt durch einen Druckstangensteller einer Bremszuspanneinrichtung eines Schienenfahrzeugs gemäß einer bevorzugten Ausführungsform in auf Maximallänge ausgefahrener Stellung;
- Fig.2: den Druckstangensteller von Fig.1 in auf Minimallänge eingefahrener Stellung.

### Beschreibung des Ausführungsbeispiels

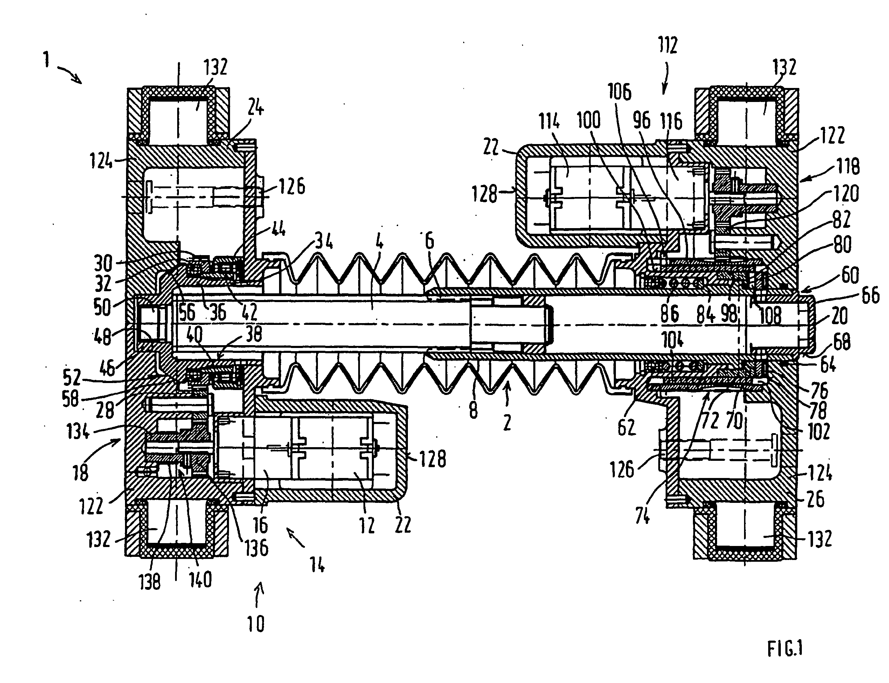

In Fig.1 ist aus Maßstabsgründen von einer elektromechanisch, pneumatisch oder hydraulisch betätigbaren Bremszuspanneinrichtung, welche gemäß einer bevorzugten Ausführungsform für eine Stadtbahn oder eine S- oder U-Bahn vorgesehen ist, lediglich ein Verschleißnachsteller 1 in Form eines Druckstangenstellers gezeigt, welcher sich in der in Fig.1 gezeigten Lage in auf Maximallänge ausgefahrener Position befindet, welche einem Zustand hohen Verschleißes der Bremsbeläge entspricht.

Der Druckstangensteller 1 beinhaltet ein Schraubgetriebe 2, das als Verschraubungsteile eine Gewindespindel 4 und eine auf dieser mittels eines Trapezgewindes 6 verschraubbare, als rohrartiges Teil ausgeführte Mutter 8 aufweist. Das Trapezgewinde 6 ist vorzugsweise nicht-selbsthemmend. Zum Verschleißnachstellen ist der Druckstangensteller 1 elektrisch betätigt ausgelegt, wofür eine elektrische Antriebseinheit 10 bestehend aus einem Elektromotor 12 mit nachgeordnetem Getriebe 14 vorgesehen ist, dessen Getriebeausgang vorzugsweise mit der Spindel 4 drehgekoppelt ist. Alternativ könnte zum Verschleißnachstellen auch die Mutter 8 oder die Spindel 4 und die Mutter 8 elektrisch betätigt ausgeführt sein.

Der Elektromotor wird beispielsweise durch einen Gleichstrommotor 12 und das Getriebe 14 durch ein sich dem Gleichstrommotor 12 axial anschließendes Planetengetriebe 16 sowie eine diesem nachgeordnete Zahnradstufe 18 gebildet. Der Gleichstrommotor 12, das Planetengetriebe 16 und die Zahnradstufe 18 sind parallel und mit radialem Abstand zu einer Mittelachse 20 des Schraubgetriebes 2 angeordnet und in einem Antriebsgehäuse 22 untergebracht, welches an ein in Fig.1 linkes Gehäuseteil 24 des Druckstangenstellers 1 angeflanscht ist, an welchem ein nicht dargestellter linker Bremszangenhebel einer Bremszange der Bremszuspanneinrichtung angelenkt ist. Dem linken Gehäuseteil 24 liegt in Axialrichtung des Schraubgetriebes 2 gesehen ein rechtes Gehäuseteil 26 gegenüber, an welchem der rechte Bremszangenhebel der Bremszange angelenkt ist. Eine solche Bremszange ist hinlänglich bekannt und beispielsweise in der EP 0 699 846 A2 beschrieben, auf deren gesamten Offenbarungsgehalt Bezug genommen wird. Das linke Gehäuseteil 24 und das rechte Gehäuseteil 26 des Druckstangenstellers 1 sind durch das Schraubgetriebe 2 aneinander abstandsveränderlich gehalten, indem durch Verlängern des Schraubgetriebes 2 bzw. des Druckstangenstellers 1 eine Verschleißnachstellung erfolgen und das sich im Laufe der Zeit vergrößernde Belagspiel zwischen den Bremsbelägen und der Bremsscheibe wieder verkleinert und auf einem konstanten Wert gehalten werden kann.

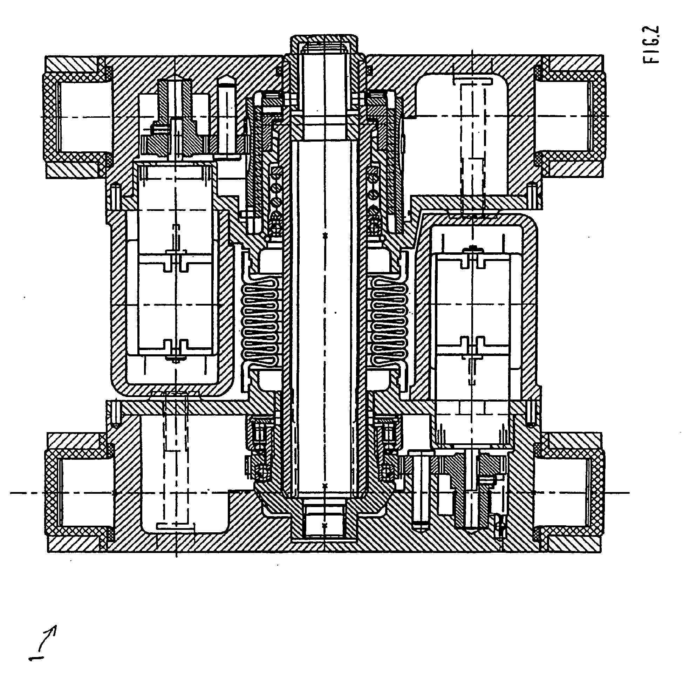

Das getriebeausgangsseitige Zahnrad 28 der Zahnradstufe 18 kämmt mit einem spindelseitigen Zahnrad 30, welches durch ein Rillenkugellager 32 auf einem zylindrischen Fortsatz 34 einer Konushülse 36 koaxial drehbar gelagert ist. Durch eine auf der zum rechten Gehäuseteil 26 weisenden Seite des spindelseitigen Zahnrads 30 angeordnete Rutschkupplung 38 ist die elektrische Antriebseinheit 10 mit der Konushülse 36 gekoppelt. Die Rutschkupplung 38 beinhaltet durch definierten Federdruck in an der Stirnfläche des spindelseitigen Zahnrades 30 ausgebildete Rillen vorgespannte Kugeln 40, welche in Bohrungen 42 eines auf dem zylindrischen Fortsatz 34 der Konushülse 36 drehfest gehaltenen Rings 44 geführt sind. Bei Drehmomenten, welche größer als ein definiertes Rutschmoment sind, wird der durch die in die Rillen gedrückten Kugeln 40 gebildete Formschluß überwunden und die Kupplung 38 rutscht durch, wodurch die elektrische Antriebseinheit 10 von der Spindel 4 entkoppelt wird. Das Rutschmoment kann durch geeignete Wahl der Federparameter und der Kugel-Rillen-Geometrie an die gerade vorliegenden Erfordernisse angepaßt werden. Im vorliegenden Fall rutscht die Kupplung 38 durch, wenn die Bremszuspanneinrichtung Anschlagpositionen erreicht, wie beispielsweise die Position, in welcher die Bremsbeläge an der Bremsscheibe zum Anliegen kommen oder die Position, in welcher der Druckstangensteller 1 auf Minimallänge (Fig.2) verkürzt und die Spindel 4 vollständig in die Mutter 8 eingeschraubt ist.

Das vermittels der Rutschkupplung 38 auf den Ring 44 übertragene Antriebsmoment wird in die Konushülse 36 eingeleitet, an deren Boden ein zapfenförmiger Fortsatz 46 vorhanden ist, dessen radial äußere Fläche eine Lagerfläche eines Gleitlagers 48 bildet, die in einer ihr zugeordneten gehäuseseitigen Lagerfläche gleit- und drehbar gelagert ist. Das Gleitlager 48 dient als in Fig.1 linksseitige Lagerstelle der Spindel 4 , welche ihrerseits mit einem endseitigen Gewindezapfen 50 in ein im Fortsatz 46 der Konushülse 36 vorhandenes Innengewinde eingeschraubt und dort drehfest gehalten ist. Infolgedessen kann die Konushülse 36 das über die Rutschkupplung 38 eingeleitete Antriebsmoment auf die Spindel 4 übertragen.

Der elektrischen Antriebseinheit 10 ist eine Konuskupplung 52 vorgeordnet, welche wenigstens zwei durch Reibung gegeneinander zum Stillstand bringbare, in Axialrichtung gesehen schräg angeordnete Konusflächen 56, 58 beinhaltet, wobei eine der Konusflächen 56 am linken Gehäuseteil 24 und die andere Konusfläche 58 an der mit der Spindel 4 verschraubten Konushülse 36 ausgebildet ist. Wenn die Spindel 4 unter Axiallast gesetzt ist, werden die beiden Konusflächen 56, 58 in Richtung der konischen Verengung aneinander gepreßt, wodurch die jeweils eingenommene Drehstellung der Spindel 4 durch Reib- oder Kraftschluß fixiert und die Axiallast vom linken Gehäuseteil 24 abgestützt wird. Insbesondere wird eine Weiterleitung der Axiallast als Drehmoment zur elektrischen Antriebseinheit 10 verhindert. Wenn hingegen keine Axiallast vorhanden ist, befindet sich die Konuskupplung 52 in gelöstem Zustand und die Konushülse 36 kann zusammen mit der Spindel 4 gegenüber dem linken Gehäuseteil 24 frei drehen.

Die rohrartige Mutter 8 ragt in eine gestufte Durchgangsöffnung 60 des rechten Gehäuseteils 26 und ist dort vermittels eines Rillenkugellagers 62 drehbar aber gegenüber dessen Innenring axial verschieblich gelagert. Im vom linken Gehäuseteil 24 weg weisendenden Ende der Mutter 8, das mit seinem Außenumfang gleitend an einer in der Durchgangsöffnung 60 des rechten Gehäuseteils 26 aufgenommenen Dichtung 64 anliegt, ist eine Hülse 66 dreh- und axialfest gehaltert, deren aus der Durchgangsöffnung 60 ragendes Ende mit einer Ansatzfläche 68 für ein Schraubwerkzeug versehen ist. Die Mutter 8 ist außerdem durch eine Rutschkupplung 70 mit einer koaxialen Freilaufhülse 72 eines sperrbaren Freilaufs 74 gekoppelt, welche einerseits auf der Mutter 8 axial verschieblich gehalten ist und sich andererseits über ein vorzugsweise als Axialnadellager ausgeführtes Axiallager 76 gegen eine radiale Wandung 78 des rechten Gehäuseteils 26 abstützt. Hierdurch wird die Mutter 8 axial gelagert.

Die Rutschkupplung 70 wird vorzugsweise durch zwei miteinander durch Federdruck in Axialrichtung kämmende Stirnplanverzahnungen 80, 82 gebildet, wobei die eine Stirnplanverzahnung 80 an einem radial äußeren Ringkragen des in das rechte Gehäuseteil 26 ragenden Endes der Mutter 8 und die andere Stirnplanzahnung 82 an der radial inneren Umfangsfläche der Freilaufhülse 72 ausgebildet ist.

Die Mutter 8 wird mittels einer sich einendseitig am Rillenkugellager 62 und anderendseitig an einem äußeren Absatz 84 der Mutter 8 abstützenden Schraubenfeder 86 gegen die Freilaufhülse 72 vorgespannt, so daß die beiden Stirnplanverzahnungen 80, 82 miteinander in Eingriff stehen. Bei Überschreiten eines Rutschmoments geraten die beiden Stirnplanverzahnungen 80, 82 unter axialer Verschiebung der Mutter 8 in Richtung auf das linke Gehäuseteil 24 außer Eingriff, wodurch sich die Mutter 8 gegenüber der Freilaufhülse 72 drehen kann. Das Rutschmoment der Rutschkupplung 70 ist durch geeignete Wahl der Federparameter und der Stirnplanverzahnungen 80, 82 anpaßbar.

Im rechten Gehäuseteil 26 ist eine elektrische Antriebseinheit 112 zum Notlösen und Hilfslösen der Bremszuspanneinrichtung aufgenommen, wobei unter "Notlösen" ein Bremskraftabbau der unter Bremskraft stehenden Bremszuspanneinrichtung beispielsweise bei Versagen des Bremsaktors und unter "Hilfslösen" ein Lösen der nicht unter Bremskraft stehenden Bremse zu Wartungsarbeiten, beispielsweise zum Bremsbelagwechsel verstanden werden soll.

Die elektrische Antriebseinheit 112 besteht aus einem vorzugsweise als Gleichstrommotor 114 ausgeführten Elektromotor, einem Planetengetriebe 116 sowie einer Zahnradstufe 118, so daß die beiden elektrischen Antriebseinheiten 10, 112 vorzugsweise identisch aufgebaut sind. Das getriebeausgangseitige Zahnrad 120 der Zahnradstufe 118 kämmt mit einer mit dem Schraubgetriebe 2 koaxialen Zahnhülse 96, welche im rechten Gehäuseteil 26 drehbar aufgenommen ist und zu einer mit der radial äußeren Umfangsfläche 98 der Freilaufhülse 72 bündigen und sich dieser axial anschließenden Gehäusefläche 100 durch einen Ringraum 102 radial beabstandet ist. Im Ringraum 102 ist eine zur Mittelachse 20 des Schraubgetriebes 2 koaxiale Schlingfeder 104 mit zwei in radialer Richtung gegenläufig abgebogenen zapfenartigen Enden 106, 108 aufgenommen, wobei ein Ende 106 in einer radialen Durchgangsbohrung der Zahnhülse 96 und das andere Ende 108 in einer radialen Durchgangsbohrung der Freilaufhülse 72 formschlüssig gehalten ist.

Die Zahnhülse 96, die Schlingfeder 104, die Freilaufhülse 72 und die Gehäusefläche 100 bilden zusammen einen sperrbaren Freilauf als Schlingfederfreilauf 74, welcher die elektrische Antriebseinheit 112 mit der Mutter 8 koppelt. Genauer ist der Schlingfederfreilauf 74 einerseits zur Drehung der Mutter 8 mittels der elektrischen Antriebseinheit 112 in einer Richtung gegen die Verschleißnachstellung und andererseits zur Sperrung dieser Drehung ausgebildet, wenn die Drehung der Mutter 8 nicht von der elektrischen Antriebseinheit 112 veranlaßt wird. Der Mutter 8 und dem Schlingfederfreilauf 74 ist die bereits oben beschriebene Rutschkupplung 70 zwischengeordnet.

Die beiden elektrischen Antriebseinheiten 10, 112 sind bezogen auf einen gedachten Schnittpunkt der Mittelachse 20 des Schraubgetriebes 2 und einer gedachten vertikalen Mittellinie des Druckstangenstellers 1 im wesentlichen zueinander punktsymmetrisch angeordnet, wobei sie ausgehend vom Ende der Spindel 4 bzw. der Mutter 8 aufeinander zu weisen. Genauer ragt die Antriebseinheit 10 zum Verschleißnachstellen im wesentlichen vom antriebsseitigen Ende der Spindel 4 in Richtung auf die Antriebseinheit 112 zum Not- und Hilfslösen und letztere im wesentlichen vom antriebsseitigen Ende der Mutter 8 in Richtung auf die Antriebseinheit 10 zum Verschleißnachstellen. Beide Antriebseinheiten 10, 112 betätigen ein einziges Schraubgetriebe 2 zum kombinierten Verschleißnach-stellen und Not- bzw. Hilfslösen.

Das rechte und linke Gehäuseteil 24, 26 besteht jeweils aus bezogen auf die Mittelachse 20 des Schraubgetriebes 2 im wesentlichen symmetrischen Gehäuseabschnitten 122, 124, wobei in jeweils einem Gehäuseabschnitt 122 die Antriebseinheit 10, 112 und in dem auf der anderen Seite der Mittelachse 20 angeordneten Gehäuseabschnitt 124 je ein Endlagensensor 126 aufgenommen ist, welcher einer stirnseitigen Fläche 128 des Antriebsgehäuses 22 der jeweils anderen elektrischen Antriebseinheit 10, 112 gegenüberliegt. Die Endlagensensoren sind vorzugsweise in Form von mechanischen Endlagenschaltern 126 ausgebildet, welche jeweils durch Anlage der stirnseitigen Fläche 128 des Antriebsgehäuses 22 der gegenüberliegenden Antriebseinheit 10, 112 betätigt und ein Signal zum Erreichen der in Fig.2 dargestellten Position, in welcher der Druckstangensteller 1 auf Minimallänge eingefahren ist, an eine aus Maßstabsgründen nicht dargestellte Steuereinrichtung liefern, woraufhin die jeweils betätigte Antriebseinheit 10, 112 stromlos geschaltet wird. Die beiden Gehäuseabschnitte 122, 124 eines jeden Gehäuseteils 24, 26 sind an ihren voneinander weg weisenden Enden mit jeweils einer Aufnahme 132 für Bolzen versehen, durch welche an jedes Gehäuseteil 24, 26 je ein Bremszangenhebel der Bremszange angelenkt ist.

Ferner ist auf einem zylindrischen Fortsatz 134 des planetengetriebeseitigen Zahnrades 136 der der Antriebseinheit 10 zum Verschleißnachstellen zugeordneten Zahnradstufe 18 eine Schlingfeder 138 eines weiteren Schlingfederfreilaufs 140 angeordnet, welcher eine Drehung dieses Zahnrades 136 in Richtung gegen die Verschleißnachstellung sperrt und es in der Gegendrehrichtung freilaufen läßt.

Aufgrund des beschriebenen Aufbaus des Druckstangensteller 1 kann durch ein einziges Schraubgetriebe 2, von welchem je ein Verschraubungsteil mit einer separaten, von der anderen Antriebseinheit unabhängigen Antriebseinheit gekoppelt ist, nämlich einerseits die Spindel 4 mit der einen elektrischen Antriebseinheit 10 und andererseits die Mutter 8 mit der weiteren elektrischen Antriebseinheit 112, sowohl der Bremsbelagverschleiß korrigiert als auch die Bremse not- und hilfsgelöst werden.

Vor diesem Hintergrund ist die Funktionsweise des Druckstangenstellers 1 wie folgt :

Das Verschleißnachstellen, d.h. die Verkleinerung des zwischen den Bremsbelägen und der Bremsscheibe vorhandenen und durch Verschleiß zu groß gewordenen Belagspiels erfolgt in der bremskraftfreien Bremslösestellung. Hierzu wird der Gleichstrommotor 12 der zum Verschleißnachstellen vorgesehenen elektrischen Antriebseinheit 10 über eine vorbestimmte Zeit angesteuert und versetzt die Spindel 4 über die bei einem gegenüber dem Rutschmoment kleineren Antriebsmoment geschlossene Rutschkupplung 38 in einer Drehrichtung in Drehbewegung, in welcher sich die Spindel 4 aus der Mutter 8 herausschraubt und dadurch den Druckstangensteller 1 verlängert, was in einer Verringerung des Belagspiels resultiert. Fig.2 zeigt den Druckstangensteller 1 in auf Maximallänge ausgefahrener Position. Da das Schraubgetriebe 2 hierbei nur durch sehr geringe Axialkräfte belastet wird, befindet sich die Konuskupplung 52 in gelöster Stellung, so daß sich die Spindel 4 frei drehen kann. Der mutterseitige Schlingfederfreilauf 74 sperrt ein Mitdrehen der an sich nicht verdrehgesicherten Mutter 8, da eine Drehung der Mutter 8 über die Rutschkupplung 70 auf die Freilaufhülse 72 und von dort auf die Schlingfeder 104 übertragen wird, welche sich daraufhin zuzieht und eine reibschlüssige Verbindung zwischen der Freilaufhülse 72 und der Gehäusefläche 100 schafft, wodurch die Mutter 8 am rechten Gehäuseteil 26 drehfest abgestützt ist.

Während einer Bremsung könnte die aus der an den Bremsbelägen vorhandenen Bremskraft resultierende und über die gelenkig gelagerten Zangenhebel der Bremszange auf den Druckstangensteller 1 übertragene und dort in axialer Richtung wirkende Reaktionsdruckkraft nicht am Schraubgetriebe 2 abgestützt werden, da das Trapezgewinde 6 zwischen Spindel 4 und Mutter 8 nicht-selbsthemmend ausgeführt ist. Folglich würde sich der Druckstangensteller 1 unter dem Einfluß der axialen Druckkraft verkürzen und somit ein unerwünschter Verlust an Bremskraft hervorgerufen werden. Indes schließt die Konuskupplung 52 unter der Wirkung der Axiallast durch Zusammenpressen der einander zugeordneten Konusflächen 56, 58 reibschlüssig und stellt eine drehfeste Verbindung zwischen der Spindel 4 und dem linken Gehäuseteil 24 her. Zum andern bleibt die als Stirnplanverzahnung 80, 82 ausgeführte mutterseitige Rutschkupplung 70 unter Axiallast geschlossen und überträgt das Reaktionsmoment auf die Schlingfeder 104, welche sich daraufhin zuzieht und das Reaktionsmoment am rechten Gehäuseteil 26 abstützt. Infolgedessen kann während eines Bremsvorgangs keine Verkürzung des Druckstangenstellers 1 und somit kein ungewollter Bremskraftverlust eintreten.

Falls bei einem Bremsaktor, welcher die Bremskraft der Bremszuspanneinrichtung erzeugt, oder in seiner Ansteuerung ein Fehler auftritt, der dazu führt, daß der Bremsaktor die unter Bremskraft stehende Bremse nicht mehr lösen kann, muß diese notgelöst werden. Zum Notlösen der Bremse wird vorzugsweise von einem Führerstand der S- oder U-Bahn aus die elektrische Antriebseinrichtung 112 zum Not- und Hilfslösen angesteuert und zwar in einer Drehrichtung, in welcher die Schlingfeder 104 aufgeweitet und hierdurch der zuvor vorhandene Reibschluß zwischen der Freilaufhülse 72 und der Gehäusefläche 100 aufgehoben wird, wodurch der Mutter 8 ein freier Lauf in dieser Drehrichtung möglich ist. Infolgedessen kann die Schlingfeder 104 die in sie über die Zahnhülse 96 eingeleitete Drehbewegung auf die Freilaufhülse 72 übertragen, von welcher die Drehung über die geschlossene, weil nicht überlastete Rutschkupplung 70 an die nun frei laufende Mutter 8 weitergeleitet wird, wodurch sich der Druckstangensteller 1 verkürzt und Bremskraft abgebaut wird. Hierdurch kann der Druckstangensteller 1 bis auf die in Fig.2 dargestellte Minimallänge verkürzt werden, in welcher die Mutter 8 stirnseitig den Boden der Konushülse 36 kontaktiert und die Endlagenschalter 126 betätigt werden.

Falls die Bremse zu Wartungsarbeiten in eine Stellung gebracht werden soll, in welcher sich die Bremsbeläge in maximaler Entfernung zur Bremsscheibe befinden, beispielsweise zum Wechsel der Bremsbeläge, so kann das Lösen der Bremse ebenfalls über die elektrische Antriebseinheit 112 zum Not- und Hilfslösen in der oben beschriebenen Weise erfolgen (Hilfslösen). Da jedoch das mittels der durch das Antriebsmoment aufgeweiteten und auf Biegung beanspruchten, mutterseitigen Schlingfeder 104 übertragbare Drehmoment begrenzt ist, wird in den Fällen, in welchen das Schraubgetriebe 2 schwergängig ist, beispielsweise bei Vereisung, die Mutter 8 zum Verkürzen des Druckstangenstellers 1 direkt verdreht. Dies erfolgt im bremskraftfreien Zustand durch Ansetzen eines Schraubwerkzeugs an der Ansatzfläche 68 der mit der Mutter 8 drehfest verbundenen Hülse 66, wobei diese manuell in einer Richtung gedreht, in welcher sich der Druckstangensteller 1 bis auf die in Fig.2 gezeigte Minimallänge verkürzt. Das Drehmoment muß dabei so groß sein, daß die zwischen der Freilaufhülse 72 und der Mutter 8 angeordnete Rutschkupplung 70 durchrutschten kann, während die Schlingfeder 104 des Schlingfederfreilaufs 74 die Freilaufhülse 72 in dieser Richtung sperrt. Hierbei wird die Mutter 8 von der Freilaufhülse 72 weg soweit in axialer Richtung verschoben, daß die beiden Stirnplanverzahnungen 80, 82 außer Eingriff geraten.

Die Erfindung ist nicht auf Druckstangensteller 1 von Bremszuspanneinrichtungen beschränkt, vielmehr kann sie auch für Zugstangensteller angewendet werden.

### Bezugszeichenliste

- 1: Druckstangensteller
- 2: Schraubgetriebe
- 4: Spindel
- 6: Trapezgewinde
- 8: Mutter
- 10: elektr. Antriebseinheit
- 12: Elektromotor
- 14: Getriebe
- 16: Planetengetriebe
- 18: Zahnradstufe
- 20: Mittelachse
- 22: Antriebsgehäuse
- 24: linkes Gehäuseteil
- 26: rechtes Gehäuseteil
- 28: Zahnrad
- 30: Zahnrad
- 32: Rillenkugellager
- 34: zylindrischer Fortsatz
- 36: Konushülse
- 38: Rutschkupplung
- 40: Kugeln
- 42: Bohrungen
- 44: Ring
- 46: Fortsatz
- 48: Gleitlager
- 50: Gewindezapfen
- 52: Konuskupplung
- 56: Konusfläche
- 58: Konusfläche
- 60: Durchgangsöffnung
- 62: Rillenkugellager
- 64: Dichtung
- 66: Hülse
- 68: Ansatzfläche
- 70: Rutschkupplung
- 72: Freilaufhülse
- 74: Freilauf
- 76: Axiallager
- 78: Wandung
- 80: Stirnplanverzahnung
- 82: Stirnplanverzahnung
- 84: äußerer Absatz
- 86: Schraubenfeder
- 96: Zahnhülse
- 98: Umfangsfläche
- 100: Gehäusefläche
- 102: Ringraum
- 104: Schlingfeder
- 106: Ende
- 108: Ende
- 112: elektr. Antriebseinheit
- 114: Gleichstrommotor
- 116: Planetengetriebe
- 118: Zahnradstufe
- 120: Zahnrad
- 122: Gehäuseabschnitt
- 124: Gehäuseabschnitt
- 126: Endlagenschalter
- 128: Fläche
- 132: Aufnahme
- 134: Fortsatz
- 136: Zahnrad
- 138: Schlingfeder
- 140: Schlingfederfreilauf

## Patentansprüche

1. Bremszuspanneinrichtung für Fahrzeuge, insbesondere für Schienenfahrzeuge, mit einem Verschleißnachsteller, der eine Einrichtung zum Notlösen der Bremse umfasst, **dadurch gekennzeichnet, dass** sie zusätzlich eine Einrichtung zum Hilfslösen der Bremse aufweist, welche zusammen mit der Einrichtung zum Notlösen der Bremse in einer kombinierten, von einer gemeinsamen Antriebseinheit (112) elektrisch betätigten Einrichtung (1, 2) zum Not- und Hilfslösen der Bremse zusammengefasst ist, weiche in den als Zug- oder Druckstangensteller (1) ausgebildeten Verschleißnachsteller mit einem Schraubgetriebe (2) integriert ist, das als Verschraubungsteile eine Gewindespindel (4) und eine auf dieser verschraubbare Mutter (8) aufweist, wobei wenigstens eines der Verschraubungsteile (8) zum Not- und Hilfslösen der Bremse elektrisch betätigt ist.

2. Bremszuspanneinrichtung nach Anspruch 1, **dadurch gekennzeichnet, daß** das eine Verschraubungsteil (8) des Schraubgetriebes (2) zum Not- und Hilfslösen von der gemeinsamen elektrischen Antriebseinheit (112) drehbetätigt ist.

3. Bremszuspanneinrichtung nach Anspruch 2, **dadurch gekennzeichnet, daß** das andere Verschraubungsteil (4) des Schraubgetriebes (2) zum Verschleißnachstellen von einer weiteren elektrischen Antriebseinheit (10) drehbetätigt ist.

4. Bremszuspanneinrichtung nach Anspruch 3, **dadurch gekennzeichnet, daß** zumindest während der Betätigung des anderen Verschraubungsteils (4) in einer Drehrichtung zur Verschleißnachstellung das eine Verschraubungsteil (8) drehfest gehaltert ist.

5. Bremszuspanneinrichtung nach Anspruch 4, **dadurch gekennzeichnet, daß** das eine Verschraubungsteil (8) mit der elektrischen Antriebseinheit (112) mittels eines entsperrbaren Freilaufs (74) gekoppelt ist, welcher einerseits eine Drehung des einen Verschraubungsteils (8) mittels der elektrischen Antriebseinheit (112) in einer Richtung zur Verschleißnachstellung zuläßt und andererseits zur Sperrung dieser Drehung ausgebildet ist, wenn sie nicht von der elektrischen Antriebseinheit (112) veranlaßt ist.

6. Bremszuspanneinrichtung nach Anspruch 5, **dadurch gekennzeichnet, daß** die elektrische Antriebseinheit (10) des anderen Verschraubungsteils (4) unabhängig von der elektrischen Antriebseinheit (112) des einen Verschraubungsteils (8) betätigt ist.

7. Bremszuspanneinrichtung nach Anspruch 6, **dadurch gekennzeichnet, daß** die elektrische Antriebseinheit (112) des einen Verschraubungsteils (8) einen Elektromotor (114) mit nachgeordnetem Getriebe (116, 118) beinhaltet, dessen Getriebeausgang mit dem einen Verschraubungsteil (8) drehgekoppelt ist.

8. Bremszuspanneinrichtung nach Anspruch 7, **dadurch gekennzeichnet, daß** das eine Verschraubungsteil (8) über eine Rutschkupplung (70) mit der elektrischen Antriebseinheit (112) gekoppelt ist und eine Ansatzfläche (68) zum Ansetzen eines Drehwerkzeugs aufweist.

9. Bremszuspanneinrichtung nach Anspruch 8, **dadurch gekennzeichnet, daß** das eine Verschraubungsteil durch die Mutter (8) und das andere Verschraubungsteil durch die Spindel (4) gebildet wird.

10. Bremszuspanneinrichtung nach Anspruch 9, **dadurch gekennzeichnet, daß** der entsperrbare Freilauf als Schlingfederfreilauf (74) zwischen einer zylindrischen Wandung (100) eines drehfesten Teils (26) und einer mit der Mutter (8) mitdrehenden Hülse (72) gebildet ist.

11. Bremszuspanneinrichtung nach Anspruch 10, **dadurch gekennzeichnet, daß** die elektrische Antriebseinheit (10) des anderen Verschraubungsteils (4) einen Elektromotor (12) mit nachgeordnetem Getriebe (14) beinhaltet, dessen Getriebeausgang mit dem anderen Verschraubungsteil (4) drehgekoppelt ist.

12. Bremszuspanneinrichtung nach Anspruch 7 und 11, **dadurch gekennzeichnet, daß** der Elektromotor einen Gleichstrommotor (12, 114) und das Getriebe ein sich diesem axial anschließendes Planetengetriebe (16, 116) sowie eine oder mehrere diesem nachgeordnete Zahnradstufen (18, 118) umfaßt.

13. Bremszuspanneinrichtung nach Anspruch 12, **dadurch gekennzeichnet, daß** eine der elektrischen Antriebseinheit (10) des anderen Verschraubungsteils (4) vorgeordnete Kupplung (52) vorgesehen ist, durch welche das Verschraubungsteil (4) bei Vorliegen einer von einer Bremsung herrührenden Axialkraft mit einem drehfesten Teil (24) drehfest gekoppelt und andernfalls von diesem entkoppelt ist.

14. Bremszuspanneinrichtung nach Anspruch 13, **dadurch gekennzeichnet, daß** die Kupplung durch eine Konuskupplung (52) mit wenigstens zwei durch Reibung gegeneinander zum Stillstand bringbaren Konusflächen (56, 58) gebildet wird.

15. Bremszuspanneinrichtung nach Anspruch 14, **dadurch gekennzeichnet, daß** eine der Konusflächen (56) an einem Gehäuse (24) und die andere Konusfläche (58) an einer mit dem anderen Verschraubungsteil (4) drehfest verbunden Konushülse (36) ausgebildet ist.

16. Bremszuspanneinrichtung nach Anspruch 15, **dadurch gekennzeichnet, daß** ein Gewindezapfen (50) des anderen Verschraubungsteils (4) in ein in einem Boden der Konushülse (36) ausgebildetes Innengewinde eingeschraubt ist.

17. Bremszuspanneinrichtung nach Anspruch 16, **dadurch gekennzeichnet, daß** ein mit einem getriebeausgangsseitigen Zahnrad (28) des Getriebes (14) kämmendes Zahnrad (30) auf einem zylindrischen Fortsatz (34) der Konushülse (36) koaxial drehbar gelagert ist.

18. Bremszuspanneinrichtung nach Anspruch 17, **dadurch gekennzeichnet, daß** der elektrischen Antriebseinheit (10) und dem anderen Verschraubungsteil (4) eine Rutschkupplung (38) zwischengeordnet ist, welche bei Erreichen von Anschlagpositionen durchrutschend und andernfalls koppelnd ausgebildet ist.

19. Bremszuspanneinrichtung nach Anspruch 18, **dadurch gekennzeichnet, daß** eine Anschlagposition durch das Anlegen der Bremsbeläge an der Bremsscheibe und eine weitere Anschlagposition durch eine Verschraubungsendlage gebildet wird, in welcher das andere Verschraubungsteil (4) in das eine Verschraubungsteil (8) bis zum Anschlag eingeschraubt ist oder umgekehrt.

20. Bremszuspanneinrichtung nach Anspruch 19, **dadurch gekennzeichnet, daß** die Rutschkupplung (38) der Konuskupplung (52) und der elektrischen Antriebseinheit (10) des anderen Verschraubungsteils (4) zwischengeordnet ist.

21. Bremszuspanneinrichtung nach Anspruch 20, **dadurch gekennzeichnet, daß** die Rutschkupplung (38) durch definierten Federdruck in Rillen vorgespannte Kugeln (40) beinhaltet, wobei die Rillen an einer Stirnfläche des getriebeausgangsseitigen Zahnrades (28) ausgebildet und die Kugeln (40) in Bohrungen (42) eines auf dem zylindrischen Fortsatz (46) der Konushülse (36) drehfest gehalterten Rings (44) gehalten sind.

## Claims

1. Brake application device for vehicles, in particular railway vehicles, comprising a wear readjusting device including a means for emergency brake release, **characterised in that** it comprises additionally a means for auxiliary brake release that is combined with a means for emergency brake release in a combined means (1, 2) for emergency and auxiliary brake release electrically operated by a common drive unit (112), which means is integrated into said wear readjusting device configured as drawbar or push-rod operating element (1) and including a screw mechanism (2) that comprises a threaded spindle (4) and a nut (8) screwably thereon as screwing elements, wherein at least one of said screwing elements (8) is electrically operated for emergency and auxiliary brake release.

2. Brake application device according to Claim 1, **characterised in that** said first screwing element (8) of said screw mechanism (2) is operated by said common electric drive unit for rotation for emergency and auxiliary brake release.

3. Brake application device according to Claim 2, **characterised in that** other screwing element (4) of said screw mechanism (2) is operated by another electric drive unit (10) for rotation for wear readjustment.

4. Brake application device according to Claim 3, **characterised in that**, at least during the operation of said other screwing element (4) in one sense of rotation for wear readjustment, said other screwing element (8) is maintained fixed for rotation.

5. Brake application device according to Claim 4, **characterised in that** said first screwing element (8) is coupled to said electric drive unit (112) by means of an unlockable free-wheeling coupler (74) that permits, on the one hand, a rotation of said first screwing element (8) by means of said electric drive unit (112) in a direction for wear readjustment, and is configured, on the other hand, for blocking this rotation unless it has been caused by said electric drive unit (112).

6. Brake application device according to Claim 5, **characterised in that** said electric drive unit (10) of said other screwing element (4) is operated independently of said electric drive unit (112) of said first screwing element (8).

7. Brake application device according to Claims 6, **characterised in that** said electric drive unit (112) of said first screwing element (8) comprises an electric motor (114) with a joining gear mechanism (116, 118) whose gearing output is coupled for rotation to said first screwing element (8).

8. Brake application device according to at Claim 7, **characterised in that** said first screwing element (8) is coupled to said electric drive unit (112) via a slip friction clutch (70) and presents an application area (68) for applying a turning tool.

9. Brake application device according to Claim 8, **characterised in that** said first screwing element is constituted by said nut (8) while said other screwing element is constituted by said spindle (4).

10. Brake application device according to Claim 9, **characterised in that** said unlockable free-wheeling coupler is configured as wrapping-spring free-wheeling mechanism (74) between a cylindrical wall (100) of an element (26) fixed for rotation and a sleeve (72) rotating together with said nut (8).

11. Brake application device according to Claim 10, **characterised in that** said electric drive unit (10) of said other screwing element (4) includes an electric motor (12) with a joining gear mechanism (14) whose gearing output is coupled for rotation to said other screwing element (4).

12. Brake application device according to Claims 7 and 11, **characterised in that** said electric motor is a direct-current motor (12, 114) and that said gear mechanism is a planetary gear mechanism (16, 116) axially joining it, as well as one or several gear stages (18, 118) downstream thereof.

13. Brake application device according to Claim 12, **characterised in that** a clutch (52) is provided upstream of said electric drive unit (10) of said other screwing element (4), by means of which said screwing element (4) is coupled for rotation to a part (24) fixed for rotation when an axial force is present that originates from a brake application cycle, or is decoupled therefrom in all other cases.

14. Brake application device according to Claim 13, **characterised in that** said clutch is constituted by a conical clutch (52) comprising at least two conical surfaces (56, 58) that are adapted to be brought to standstill by friction relative to each other

15. Brake application device according to Claim to 14, **characterised in that** one of said conical surfaces (56) is formed on a housing (24) while the other conical surface (58) is formed on a cone sleeve (36) connected for rotation to said other screwing element (4).

16. Brake application device according to Claim 15, **characterised in that** a male threaded end (50) of said other screwing element (4) is screwed into a female thread formed in a bottom of said cone sleeve (36).

17. Brake application device according to Claim 16, **characterised in that** a toothed wheel (30) meshing with a toothed wheel (28) of said gear mechanism (14) on the output side of said gear mechanism is supported for coaxial rotation on a cylindrical extension (34) of said cone sleeve (36).

18. Brake application device according to Claim 17, **characterised in that** a slip friction clutch (38) is interposed between said electric drive unit (10) and said other screwing element (4), which is configured for slipping when stop positions are reached or for coupling in all other cases

19. Brake application device according to Claim 18, **characterised in that** one stop position is formed by application of the brake linings against the brake disc and that another stop position is formed by a terminal screwing position in which said other screwing element (4) is screwed into said first screwing element (8) up to a terminal point, or vice versa.

20. Brake application device according to Claim 19, **characterised in that** said slip friction clutch (38) is interposed between said conical clutch (52) and said electric drive unit (10) of said other screwing element (4).

21. Brake application device according to Claim 20, **characterised in that** said slip friction clutch (38) comprises spheres (40) biased in grooves by a defined spring pressure, with said grooves being formed on a face of said toothed wheel (28) on the output side of said gear mechanism and with said spheres (40) being retained in bores (42) of a ring (44) supported for rotation on said cylindrical extension (46) of said cone sleeve (36).

## Revendications

1. Dispositif de serrage de frein pour véhicules, en particulier pour véhicules sur rail, comprenant un dispositif d'ajustage d'usure, qui comprend un dispositif pour le desserrage de secours du frein, **caractérisé en ce qu'**il présente en supplément un dispositif pour le desserrage auxiliaire du frein, lequel est regroupé conjointement avec le dispositif pour le desserrage de secours du frein dans un dispositif (1, 2) combiné, actionné électriquement par une unité d'entraînement (112) commune pour le desserrage de secours et le desserrage auxiliaire du frein, lequel dispositif est intégré dans le dispositif d'ajustage d'usure réalisé comme actionneur de tige de traction ou de pression (1) avec un engrenage hélicoïdal (2), lequel présente comme parties de vissage une broche filetée (4) et un écrou (8) pouvant être vissé sur cette broche, sachant qu'au moins l'une des parties de vissage (8) est actionnée électriquement pour le desserrage de secours et le desserrage auxiliaire du frein.

2. Dispositif de serrage de frein selon la revendication 1, **caractérisé en ce qu'**une partie de vissage (8) de l'engrenage hélicoïdal (2) est actionnée en rotation par l'unité d'entraînement (112) électrique commune pour le desserrage de secours et le desserrage auxiliaire.

3. Dispositif de serrage de frein selon la revendication 2, **caractérisé en ce que** l'autre partie de vissage (4) de l'engrenage hélicoïdal (2) est actionnée en rotation pour l'ajustage d'usure par une autre unité d'entraînement (10) électrique.

4. Dispositif de serrage de frein selon la revendication 3, **caractérisé en ce qu'**une partie de vissage (8) est fixée de façon solidaire en rotation au moins pendant l'actionnement de l'autre partie de vissage (4) dans un sens de rotation pour l'ajustage de l'usure.

5. Dispositif de serrage de frein selon la revendication 4, **caractérisé en ce que** l'une des parties de vissage (8) est couplée avec l'unité d'entraînement (112) électrique au moyen d'une roue libre (74) déblocable, qui d'une part autorise une rotation de l'une des parties de vissage (8) au moyen de l'unité d'entraînement (112) électrique dans une direction pour l'ajustage d'usure et est conçue d'autre part pour le blocage de cette rotation lorsqu'elle n'est pas sollicitée par l'unité d'entraînement (112) électrique.

6. Dispositif de serrage de frein selon la revendication 5, **caractérisé en ce que** l'unité d'entraînement (10) électrique de l'autre partie de vissage (4) est actionnée indépendamment de l'unité d'entraînement (112) électrique de l'une des parties de vissage (8).

7. Dispositif de serrage de frein selon la revendication 6, **caractérisé en ce que** l'unité d'entraînement (112) électrique l'une des parties de vissage (8) contient un moteur électrique (114) avec un engrenage (116, 118) placé en aval, dont la sortie est couplée en rotation avec l'une des parties de vissage (8).

8. Dispositif de serrage de frein selon la revendication 7, **caractérisé en ce que** l'une des parties de vissage (8) est couplée avec l'unité d'entraînement (112) électrique au moyen d'un accouplement à glissement (70) et présente une surface de rebord (68) pour le placement d'un outil rotatif.

9. Dispositif de serrage de frein selon la revendication 8, **caractérisé en ce que** l'une des parties de vissage est formée par l'écrou (8) et l'autre partie de vissage par la broche (4).

10. Dispositif de serrage de frein selon la revendication 9, **caractérisé en ce que** la roue libre déblocable est formée sous forme d'une roue libre à ressort enroulé (74) entre une paroi (100) cylindrique d'une partie (26) solidaire en rotation et un manchon (72) tournant avec l'écrou (8).

11. Dispositif de serrage de frein selon la revendication 10, **caractérisé en ce que** l'unité d'entraînement (10) électrique de l'autre partie de vissage (4) contient un moteur électrique (12) avec un engrenage (14) placé en aval, dont la sortie est couplée en rotation avec l'autre partie de vissage (4).

12. Dispositif de serrage de frein selon les revendications 7 et 11, **caractérisé en ce que** le moteur électrique comprend un moteur à courant continu (12, 114) et l'engrenage comprend un engrenage planétaire (16, 116) se raccordant axialement à celui-ci et un ou plusieurs niveaux de roues dentées (18, 118) placés en aval du premier engrenage.

13. Dispositif de serrage de frein selon la revendication 12, **caractérisé en ce qu'**il est prévu un accouplement (52) placé en amont de l'unité d'entraînement (10) électrique de l'autre partie de vissage (4), par lequel la partie de vissage (4) est couplée de façon solidaire en rotation avec une partie (24) solidaire en rotation si l'on dispose d'une force axiale provenant d'un freinage et est dissociée sinon de cette partie.

14. Dispositif de serrage de frein selon la revendication 13, **caractérisé en ce que** l'accouplement est formé par un accouplement conique (52) avec au moins deux surfaces coniques (56, 58) pouvant être amenées réciproquement à l'arrêt par frottement.

15. Dispositif de serrage de frein selon la revendication 14, **caractérisé en ce que** l'une des surfaces coniques (56) est réalisée sur un boîtier (24) et l'autre surface conique (58) sur une douille conique (36) reliée de façon solidaire en rotation à l'autre partie de vissage (4).

16. Dispositif de serrage de frein selon la revendication 15, **caractérisé en ce qu'**un tourillon fileté (50) de l'autre partie de vissage (4) est vissé dans un taraudage réalisé dans un fond de la douille conique 36.

17. Dispositif de serrage de frein selon la revendication 16, **caractérisé en ce qu'**une roue dentée (30) s'engrenant avec une roue dentée (28) côté sortie de l'engrenage (14) est fixée de façon rotative et coaxiale sur un prolongement (34) cylindrique de la douille conique (36).

18. Dispositif de serrage de frein selon la revendication 17, **caractérisé en ce qu'**un accouplement à glissement (38), qui est réalisé de façon glissante en continu et sinon couplante lorsqu'on atteint des positions de butée, est disposé entre l'unité d'entraînement (10) électrique et l'autre partie de vissage (4).

19. Dispositif de serrage de frein selon la revendication 18, **caractérisé en ce qu'**une position de butée est formée par l'application des garnitures de frein sur le disque de frein et une autre position de butée par une position finale de vissage, dans laquelle l'autre partie de vissage (4) est vissée dans l'une des parties de vissage (8) jusqu'à la butée ou inversement.

20. Dispositif de serrage de frein selon la revendication 19, **caractérisé en ce que** l'accouplement à glissement (38) est disposé entre l'accouplement conique (52) et l'unité d'entraînement (10) électrique de l'autre partie de vissage (4).

21. Dispositif de serrage de frein selon la revendication 20, **caractérisé en ce que** l'accouplement à glissement (38) contient des billes (40) précontraintes par le ressort de pression défini dans des rainures, les rainures étant réalisées sur une face frontale de la roue dentée (28) côté sortie d'engrenage et les billes (40) étant maintenues dans des perçages (42) d'une bague (44) fixée de façon solidaire en rotation sur le prolongement (46) cylindrique de la douille conique (36).
